(19) Europäisches Patentamt / European Patent Office / Office européen des brevets

(11) **EP 4 545 479 A1**

(12) **EUROPEAN PATENT APPLICATION**
published in accordance with Art. 153(4) EPC

(43) Date of publication:
**30.04.2025 Bulletin 2025/18**

(21) Application number: **24819072.0**

(22) Date of filing: **08.05.2024**

(51) International Patent Classification (IPC):
**C01B 32/168** (2017.01)  **C01B 3/02** (2006.01)

(52) Cooperative Patent Classification (CPC):
Y02E 60/36

(86) International application number:
**PCT/JP2024/017128**

(87) International publication number:
**WO 2024/252835 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.06.2023 JP 2023092151**

(71) Applicants:
• **Nihon Trim Co., Ltd.**
  **Osaka 531-0076 (JP)**
• **The University of Tokyo**
  **Bunkyo-ku, Tokyo 113-8654 (JP)**

(72) Inventors:
• **KABAYAMA, Shigeru**
  **Osaka-shi, Osaka 531-0076 (JP)**
• **SAKATA, Ichiro**
  **Tokyo 113-8654 (JP)**
• **FUGETSU, Bunshi**
  **Tokyo 113-8654 (JP)**
• **ADAVAN KILIYANKIL, Vipin**
  **Tokyo 113-8654 (JP)**

(74) Representative: **De Clercq & Partners**
  **Edgard Gevaertdreef 10a**
  **9830 Sint-Martens-Latem (BE)**

(54) **CARBON NANOTUBE MOLDED BODY, ELECTRODE FOR ELECTROCHEMICAL WATER SPLITTING AND METHOD FOR PRODUCING SAME, AND ELECTROCHEMICAL WATER SPLITTING DEVICE**

(57) Provided are a carbon nanotube molded body including carbon nanotubes, and a method of producing the same, wherein the carbon nanotube molded body has a specific surface area of 700 $m^2$/g or more, the carbon nanotube molded body has a pore distribution from 3 to 15 nm, the carbon nanotube molded body has a tensile strength of 45 MPa or more, and the carbon nanotube molded body has a Young's modulus of 1600 MPa or more. Also provided are an electrochemical water-splitting electrode comprising the carbon nanotube molded body and platinum supported on the carbon nanotube molded body, a method of producing the same, and an electrochemical water-splitting apparatus comprising the electrochemical water-splitting electrode.

FIG.1

EP 4 545 479 A1

**Description**

TECHNICAL FIELD

The present invention relates to a carbon nanotube molded body, an electrochemical water-splitting electrode, and methods of producing these, as well as an electrochemical water-splitting apparatus.

BACKGROUND ART

As a method for producing hydrogen, electrolysis of water (electrochemical water splitting) holds great promise. For electrochemical water splitting in hydrogen production, platinum-based catalysts are the most effective. However, due to insufficient global reserves of platinum, there is a demand for an advanced method that allows for reducing the amount of supported platinum while maintaining high efficiency. Activity of a catalyst is dependent on the active sites on the surface of the catalyst, so the support material plays an important role in electrode production.

In recent years, carbon nanotubes have been receiving attention due to the excellent characteristics such as high electrical conductivity, excellent thermal conductivity, and large specific surface area, and it has been suggested to form carbon nanotubes into various shapes for use in a wide range of products. For example, Japanese Patent Laying-Open No. 2022-121865 (PTL 1) suggests a carbon nanotube molded body including carbon nanotubes, wherein the carbon nanotube molded body has a density of 0.55 g/cm$^3$ or more, and the carbon nanotube molded body has a specific surface area of 500 m$^2$/g or more. In order to shape this carbon nanotube molded body into a sheet form and use the resulting carbon nanotube sheet as the above-mentioned support at an electrode, it is necessary to further improve the physical properties such as specific surface area and mechanical strength.

CITATION LIST

PATENT LITERATURE

PTL 1: Japanese Patent Laying-Open No. 2022-121865

SUMMARY OF INVENTION

TECHNICAL PROBLEM

The present invention has been devised to solve the above-described problems, and has an object to provide a novel carbon nanotube molded body that has physical properties, such as specific surface area and mechanical strength, sufficient for use as a support at an electrochemical water-splitting electrode, an electrochemical water-splitting electrode comprising the same, and methods of producing these, as well as an electrochemical water-splitting apparatus.

SOLUTION TO PROBLEM

The present invention provides a carbon nanotube molded body including carbon nanotubes, wherein the carbon nanotube molded body has a specific surface area of 700 m$^2$/g or more, the carbon nanotube molded body has a pore distribution from 3 to 15 nm, the carbon nanotube molded body has a tensile strength of 45 MPa or more, and the carbon nanotube molded body has a Young's modulus of 1600 MPa or more.

Preferably, in the carbon nanotube molded body according to the present invention, the carbon nanotube molded body has a carbon content of 98 mass% or more.

Preferably, the carbon nanotube molded body according to the present invention is a carbon nanotube sheet.

The present invention also provides an electrochemical water-splitting electrode, comprising: a carbon nanotube molded body having a specific surface area of 700 m$^2$/g or more, a pore distribution from 3 to 15 nm, a tensile strength of 45 MPa or more, and a Young's modulus of 1600 MPa or more; and platinum supported on the carbon nanotube molded body.

Preferably, in the electrochemical water-splitting electrode according to the present invention, an amount of supported platinum is within the range of 11 to 154 μg/cm$^2$.

Preferably, in the electrochemical water-splitting electrode according to the present invention, the carbon nanotube molded body is a carbon nanotube sheet, and the carbon nanotube sheet is supported on a surface of a metal structure, or on a surface of carbon fibers, or on a surface of a carbon fiber structure made of carbon fibers.

The present invention further provides an electrochemical water-splitting apparatus comprising an electrochemical water-splitting electrode, wherein the electrochemical water-splitting electrode includes: a carbon nanotube molded body having a specific surface area of 700 m$^2$/g or more, a pore distribution from 3 to 15 nm, a tensile strength of 45 MPa or more, and a Young's modulus of 1600 MPa or more; and platinum supported on the carbon nanotube molded body.

Preferably, in the electrochemical water-splitting apparatus according to the present invention, an amount of supported platinum on the electrochemical water-splitting electrode is within the range of 11 to 154 $\mu$g/cm$^2$.

Preferably, in the electrochemical water-splitting apparatus according to the present invention, the carbon nanotube molded body of the electrochemical water-splitting electrode is a carbon nanotube sheet, and the carbon nanotube sheet is supported on a surface of a metal structure, or on a surface of carbon fibers, or on a surface of a carbon fiber structure made of carbon fibers.

The present invention even further provides a method of producing a carbon nanotube molded body including carbon nanotubes, the method comprising: mixing a dispersion containing carbon nanotubes, a dispersant, and a dispersion medium and not containing monosaccharides, with a solution containing cellulose nanofibers and not containing monosaccharides, to obtain a mixture that does not contain monosaccharides; supplying the mixture thus obtained into a mold and performing drying to obtain a hardened product containing the carbon nanotubes; washing the hardened product to remove the dispersant from the hardened product; calcining the hardened product to carbonize the cellulose nanofibers; and performing activation treatment on a surface of the hardened product thus calcined.

The present invention yet further provides a method of producing an electrochemical water-splitting electrode, the method comprising performing magnetron sputtering to evaporate platinum onto the carbon nanotube molded body obtained by the method of producing a carbon nanotube molded body according to the present invention.

ADVANTAGEOUS EFFECTS OF INVENTION

By using the present invention, it is possible to provide a novel carbon nanotube molded body that has physical properties, such as specific surface area and mechanical strength, sufficient for use as a support at an electrochemical water-splitting electrode, an electrochemical water-splitting electrode comprising the same, and methods of producing these, as well as an electrochemical water-splitting apparatus.

BRIEF DESCRIPTION OF DRAWINGS

Fig. 1 is a graph showing results of specific surface area measurement performed by a BET method in Experiment Example 1 for carbon nanotube sheets as Samples 1 to 4.

Fig. 2 is a graph showing results of pore distribution measurement performed in Experiment Example 1 for carbon nanotube sheets as Samples 1 to 4.

Fig. 3 is a graph showing results of strength evaluation performed in Experiment Example 1 described below for carbon nanotube sheets as Samples 3, 4.

Fig. 4 gives graphs showing results of component analysis performed by an XPS method in Experiment Example 1 for a carbon nanotube sheet as Sample 4.

Fig. 5 is a graph showing results of measurement of the sp2/sp3 ratio performed by Raman spectrometry in Experiment Example 1 for Samples 1 to 6.

Fig. 6 is a photograph of the electrochemical water-splitting electrode according to the present invention that was actually obtained in Experiment Example 1.

Fig. 7 is a photograph of platinum supported on one carbon nanotube in the actually-obtained electrochemical water-splitting electrode according to the present invention.

Fig. 8 shows results of examination by atomic resolution TEM, where Fig. 8(a) is for carbon (C), Fig. 8(b) is for oxygen (O), and Fig. 8(c) is for platinum (Pt).

Fig. 9 shows high-resolution spectra of the electrochemical water-splitting electrode according to the present invention, where Fig. 9(a) shows C1s spectra before electrochemical water splitting, Fig. 9(b) shows C1s spectra after electrochemical water splitting, Fig. 9(c) shows Pt4f spectra before electrochemical water splitting, and Fig. 9(d) shows Pt4f spectra after electrochemical water splitting.

Fig. 10 is a graph showing results of evaluation of electrode catalytic activity (a three-electrode cell) in Experiment Example 1, using current density/overpotential as an index.

Fig. 11 is a graph showing results of evaluation of cycle performance (the amount of supported platinum was 11.5 g/cm$^2$) in Experiment Example 1.

Fig. 12 is a graph showing results of evaluation of turnover frequency (TOF) of the catalyst in Experiment Example 1.

Fig. 13 is a graph showing Tafel Plot in Experiment Example 1.

Fig. 14 is a graph showing results of evaluation of hydrogen reduction current density of a platinum catalyst per unit mass (Pt mass activity) at respective overpotentials in Experiment Example 1.

Fig. 15 gives photographs of high-magnification images of an SWCNT sheet in respective stages.

DESCRIPTION OF EMBODIMENTS

[Carbon Nanotube Molded Body]

A carbon nanotube molded body according to the present invention is excellent in specific surface area, pore distribution, tensile strength, and Young's modulus as compared to conventional carbon nanotube molded bodies, and particularly suitable for use as a support at an electrochemical water-splitting electrode.

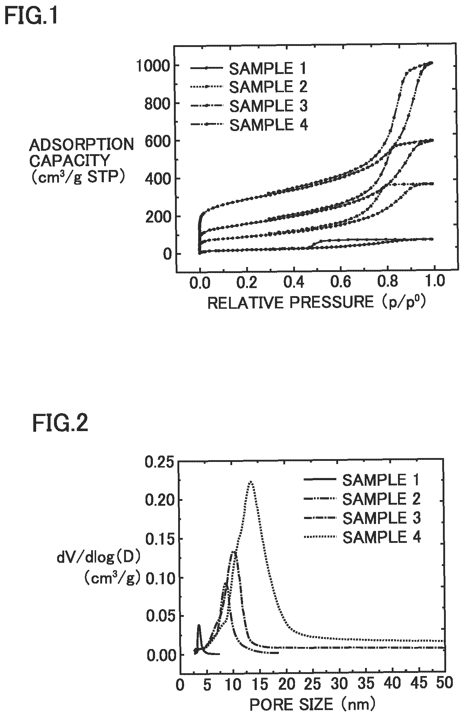

Fig. 1 is a graph showing results of specific surface area measurement performed by a BET method in Experiment Example 1 described below for carbon nanotube sheets as Samples 1 to 4 (Sample 4 to which activation treatment was performed corresponds to the "electrochemical water-splitting electrode" according to the present invention described below, and the carbon nanotube sheet as Sample 4 corresponds to the "carbon nanotube molded body" according to the present invention), where the vertical axis represents adsorption capacity ($cm^3$/g STP) and the horizontal axis represents relative pressure ($p/p^0$). The specific surface area of the carbon nanotube molded body according to the present invention is 700 $m^2$/g or more, preferably 800 $m^2$/g or more, more preferably 1000 $m^2$/g or more. When the specific surface area of the carbon nanotube molded body according to the present invention is less than 700 $m^2$/g, many large bundles (carbon nanotube assemblies) are included and they can inhibit supporting of atomic cluster-level catalyst, which is unfavorable. As long as it is not less than 700 $m^2$/g, a larger specific surface area of the carbon nanotube molded body according to the present invention is more preferable, but increasing the specific surface area requires oxidation treatment of the carbon nanotubes and the oxidation treatment can damage the carbon nanotubes. For maintaining excellent electronic conductivity of the carbon nanotubes, the specific surface area of the carbon nanotube molded body according to the present invention is preferably 1500 $m^2$/g or less, more preferably 1300 $m^2$/g or less.

Fig. 2 is a graph showing results of pore distribution measurement performed in Experiment Example 1 described below for carbon nanotube sheets as Samples 1 to 4 on which platinum was made to be supported, where the vertical axis represents dv/dlog (D) ($cm^3$/g) and the horizontal axis represents pore size (nm). The pore distribution of the carbon nanotube molded body according to the present invention is within the range of 3 to 15 nm. "Sample 1", which is a carbon nanotube sheet after washing with deionized water and washing with alcohol, contains a dispersant, a stabilizer, a remaining catalyst, and/or the like and, thereby, the pore distribution is in the neighborhood of 3 nm and the porosity is 0.05 $cm^3$/g or less. "Sample 2", which is a carbon nanotube sheet after nitric acid treatment, is not a suitable structure as a support for supporting an atomic cluster-level catalyst. When the pore distribution of the carbon nanotube molded body is less than 3 nm, the total number of distributed pores is small and therefore the carbon nanotube sheet exhibits flat-sheet-like characteristics such as no or low porosity and no or low water permeation, and, in addition, due to the high content of polymer surfactant, electrical conductivity is relatively low, which are unfavorable; on the other hand, when the pore distribution of the carbon nanotube molded body is more than 15 nm, the active surface area is small, which is unfavorable. For improving water permeation and active surface area, the pore distribution of the carbon nanotube molded body according to the present invention is preferably within the range of 7 to 15 nm, more preferably within the range of 9 to 14 nm.

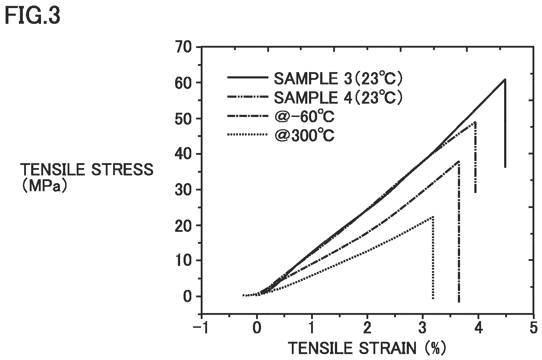

Fig. 3 is a graph showing results of strength evaluation in Experiment Example 1 described below for carbon nanotube sheets as Samples 3, 4, performed in accordance with a JIS method at 23°C (as well as at -60°C and 300°C for Sample 4), where the vertical axis represents tensile stress (MPa) and the horizontal axis represents tensile strain (%). The tensile strength of the carbon nanotube molded body according to the present invention is 45 MPa or more, preferably 50 MPa or more, more preferably 60 MPa or more. When the tensile strength of the carbon nanotube molded body is less than 45 MPa, bending tends to occur to cause breakage, so handling is difficult, which is unfavorable. As long as it is not less than 45 MPa, a higher tensile strength of the carbon nanotube molded body according to the present invention is more preferable; however, to make it high, it is necessary to reduce carbonization treatment and oxidation treatment, and as a result of this, polymer surfactants can remain, leading to a decrease of surface area and electrical conductivity, so for these reasons, the tensile strength of the carbon nanotube molded body according to the present invention is preferably 70 MPa or less, more preferably 65 MPa or less. The Young's modulus of the carbon nanotube molded body according to the present invention is 1600 MPa or more, preferably 1800 MPa or more, more preferably 2000 MPa or more. When the Young's modulus of the carbon nanotube molded body is less than 1600 MPa, elasticity is poor and thereby damage and deformation can occur when pulled, which is unfavorable. As long as it is not less than 1600 MPa, a higher Young's modulus of the carbon nanotube molded body according to the present invention is more preferable; however, to make it high, it is necessary to reduce carbonization treatment and oxidation treatment, and as a result of this, polymer surfactants can remain, leading to a decrease of surface area and electrical conductivity, so for these reasons, the Young's modulus of the carbon nanotube molded body according to the present invention is preferably 2400 MPa or less, more preferably 2000 MPa or less.

Preferably, at the time of a folding test where the carbon nanotube molded body according to the present invention is folded one million times, the carbon nanotube molded body does not become broken. With this, excellent flexibility can be obtained. Usually, a metal molded body breaks after about a hundred thousand times. The above-mentioned folding test enables to perform evaluation in an environment at a temperature from 23°C to 27°C and a relative humidity from 30% to 70%, with the use of a folding tester (DE MATTIA Flex-Cracking And Crack Growth Tester (manufactured by Yasuda Seiki Seisakusho Ltd.)).

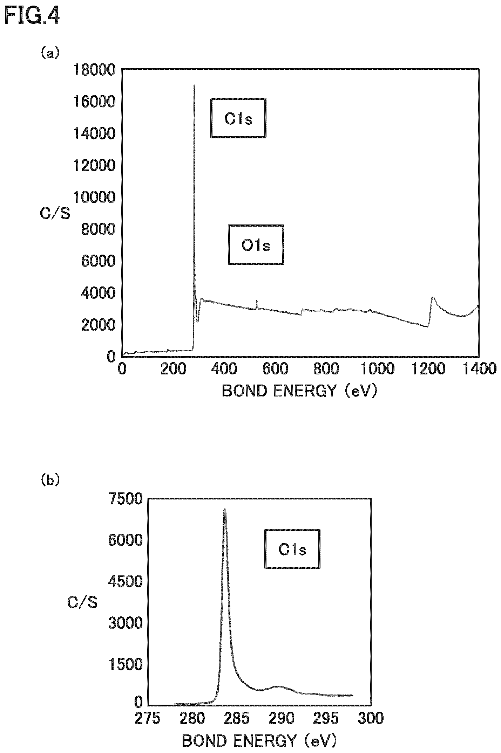

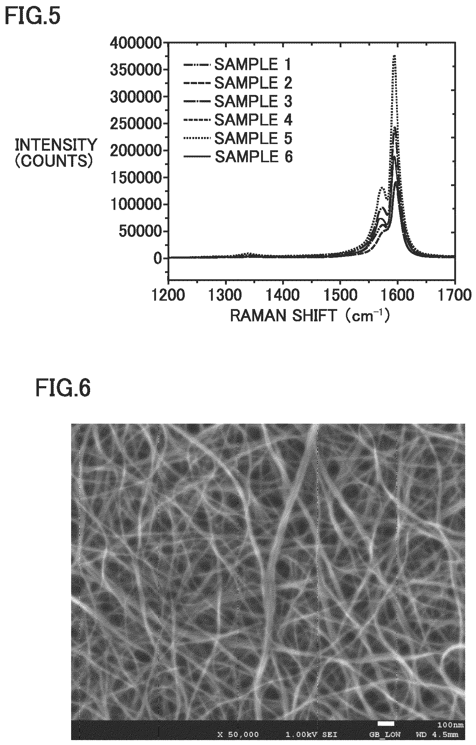

Fig. 4 gives graphs showing results of component analysis performed by an XPS method in Experiment Example 1 described below for a carbon nanotube sheet as Sample 4, where Fig. 4(a) shows results of wide-range scanning and Fig. 4(b) shows results of narrow-range scanning, and the vertical axis represents C/S and the horizontal axis represents bond energy (eV). Fig. 5 is a graph showing results of measurement of the sp2/sp3 ratio performed by Raman spectrometry in Experiment Example 1 described below for Samples 1 to 6, where the vertical axis represents intensity (counts) and the horizontal axis represents Raman shift ($cm^{-1}$). The carbon content of the carbon nanotube molded body according to the present invention is preferably 98 mass% or more, more preferably 98.5 mass% or more, particularly preferably 99.0 mass% or more. When the carbon content of the carbon nanotube molded body is less than 98 mass%, the carbon nanotube molded body contains metal impurities, and the metal impurities tend to adversely affect catalyst performance and, also, the metal impurities tend to adversely affect addition of platinum onto carbon nanotubes. As long as it is not less than 98 mass%, a higher carbon content of the carbon nanotube molded body according to the present invention is more preferable, but it requires strong acid treatment of the carbon nanotube molded body, which can damage the carbon nanotube molded body and, also, the high purity means an increased cost of the carbon nanotube molded body; so the carbon content of the carbon nanotube molded body is preferably 99.5 mass% or less, more preferably 99.0 mass% or less.

The shape of the carbon nanotube molded body according to the present invention is not particularly limited, but, for example, it may be a sheet form, an arch form, a ring band form, a belt form, a thread form, and the like. Among these, to be suitable for use in an electrochemical water-splitting electrode described below, the carbon nanotube molded body is preferably a carbon nanotube sheet.

[Electrochemical Water-Splitting Electrode]

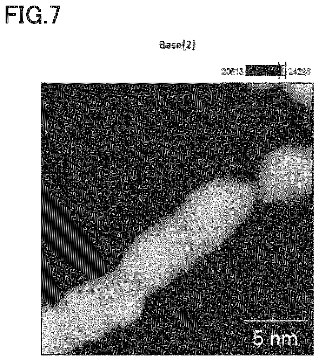

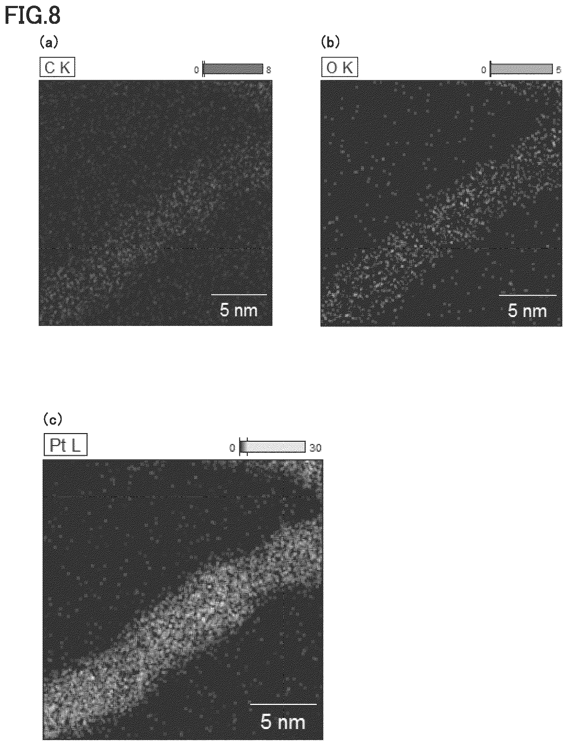

The present invention also provides an electrochemical water-splitting electrode, comprising: a carbon nanotube molded body having a specific surface area of 700 $m^2/g$ or more, a pore distribution from 3 to 15 nm, a tensile strength of 45 MPa or more, and a Young's modulus of 1600 MPa or more; and platinum (Pt) supported on the carbon nanotube molded body. Fig. 6 is a photograph of the electrochemical water-splitting electrode according to the present invention that was actually obtained in Experiment Example 1 described below. Fig. 7 is a photograph (10000000 times) of platinum supported on one carbon nanotube in the actually-obtained electrochemical water-splitting electrode according to the present invention; Fig. 8 shows results of examination by atomic resolution TEM, where Fig. 8(a) is for carbon (C), Fig. 8(b) is for oxygen (O), and Fig. 8(c) is for platinum (Pt).

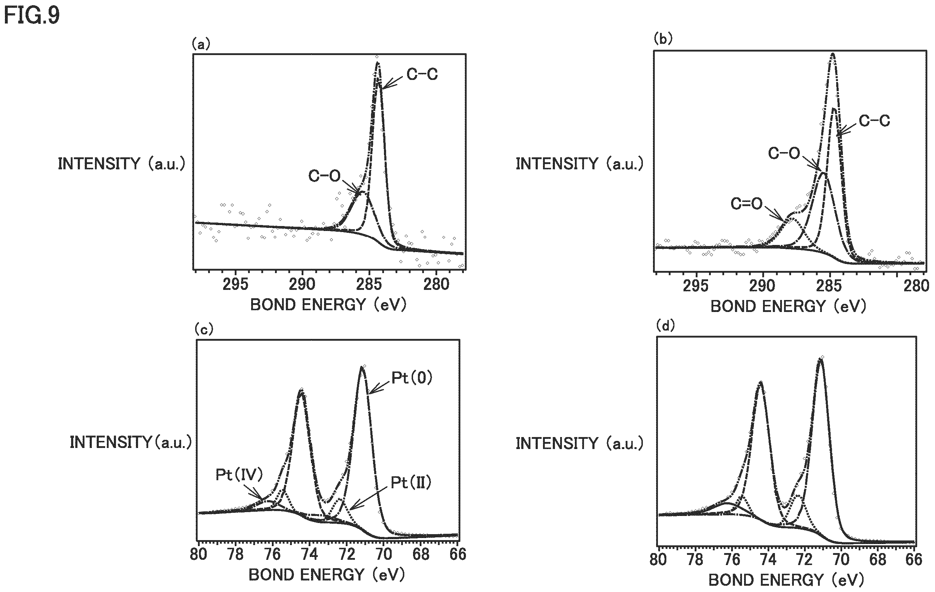

Fig. 9 shows high-resolution spectra of the electrochemical water-splitting electrode according to the present invention measured with the use of PHI500 VersaProbe (manufactured by ULVAC-PHI), where Fig. 9(a) shows C1s spectra before electrochemical water splitting, Fig. 9(b) shows C1s spectra after electrochemical water splitting, Fig. 9(c) shows Pt4f spectra before electrochemical water splitting, and Fig. 9(d) shows Pt4f spectra after electrochemical water splitting. In Fig. 9(c), noticeable peaks are observed at 71.4 eV and 74.8 eV for Pt4f7/2 and 4f5/2, respectively. As a result of deconvolution of these peaks, peaks for three types of chemical isotopes, namely, Pt(0), Pt(II), and Pt(IV), were observed at 71.2 eV, 72.4 eV, and 73.7 eV, respectively. Moreover, from Figs. 9(a) and 9(b), it was indicated that, as for the C1s spectra, after addition of platinum, the peak for sp2 hybridization became weaker and that for sp3 hybridization became stronger. By a detailed analysis, it was proved that metal platinum is dominant and there is a strong interaction between the metal and the substrate. Hence, in the electrochemical water-splitting electrode according to the present invention, subnano-sized platinum atomic clusters each made up of several dozen to several hundred Pt atoms are supported on the carbon nanotube molded body. This allows for making the utmost use of the active surface (111 plane) of the platinum catalyst, and also allows for using the HOMO-LOMO interaction between the platinum atomic clusters and the carbon nanotube molded body to seek for ultralong lifetime of the platinum catalyst. Making platinum nanoparticles supported on a carbon-based composite material is a promising method for enhancing catalytic activity in electrochemical water splitting, and by precisely controlling the carbon material, it is possible to obtain a desirable nanostructure having a large specific surface area and abundant active sites. The strong interaction between the metal species and the carbon support as well as the synergistic effect between them can effectively prevent accumulation and elution of metal nanoparticles during the electrochemical process. In addition, with the enhanced electrical conductivity of the base material, rapid movement of electrons is made possible and thereby excellent catalytic activity can be obtained. Here, because catalytic activity is dependent on the quality of the base material and the platinum nanoparticles, an important role on catalytic activity is played by the size, form, and position of the platinum nanoparticles present on the carbon nanotubes. However, in most composite materials, only the surface atoms contribute to electrochemical water splitting, so platinum atoms of the nanoparticles are only used as the core of the particles and not fully exhibiting their effectiveness. By making the size of the platinum nanoparticles smaller, it is possible to greatly reduce the usage of the noble metal and also to enhance the catalytic activity, thereby potentially reducing the cost of the electrode catalyst.

In the electrochemical water-splitting electrode according to the present invention, the amount of supported platinum is preferably within the range of 11 to 154 $\mu$g/cm$^2$, and because the amount of platinum on the carbon nanotubes needs to be optimized when atomic-level platinum is used and also because the nanoparticles need to be as small as possible, evenly distributed, and not excessive, it is more preferably within the range of 11 to 117 $\mu$g/cm$^2$. The reason is as follows: when the amount of supported platinum is less than 11 $\mu$g/cm$^2$, there is a tendency that this amount of platinum can be too low to obtain sufficient electric currents and a high voltage needs to be used; and when the amount of supported platinum is more than 154 $\mu$g/cm$^2$, the amount of platinum on respective independent carbon nanotubes is excessive and the excessive amount of platinum aggregates together during electrochemical reaction, which tends to cause degradation of performance. The electrochemical water-splitting electrode according to the present invention allows for making the utmost use of the active surface (111 plane) of the platinum catalyst, and is capable of exhibiting outstanding electrochemical water splitting performance with a very low amount of supported platinum as compared to prior art.

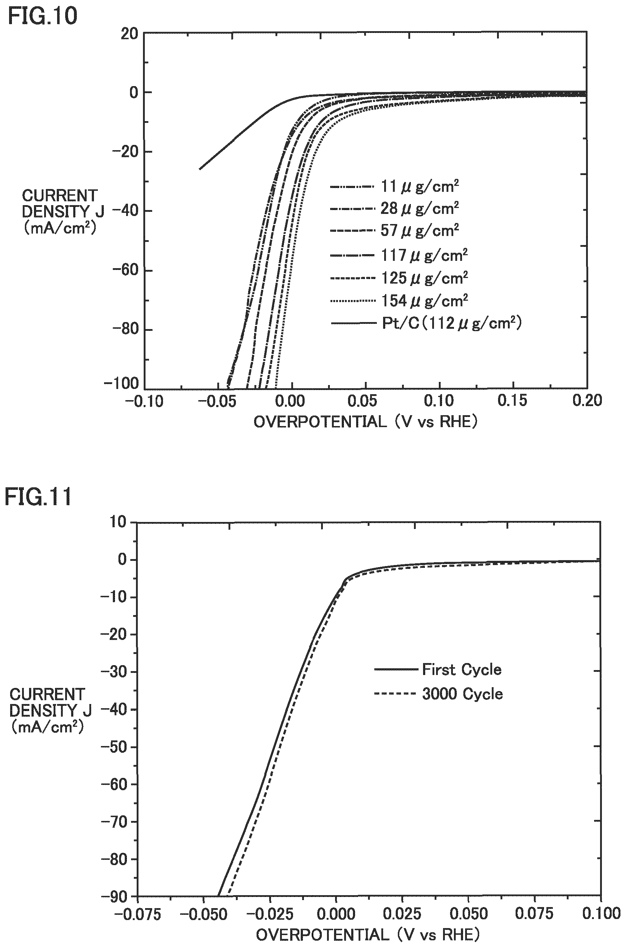

Fig. 10 is a graph showing results of evaluation of electrode catalytic activity (a three-electrode cell) in Experiment Example 1 described below, using current density/overpotential as an index, where the vertical axis represents current density J (mA/cm$^2$) and the horizontal axis represents overpotential (V vs RHE). From the results shown in Fig. 10, it was found that at a current density of 100 mA/cm$^2$ and at the same amount of supported platinum (117$\pm$5 $\mu$g/cm$^2$), the overpotential of the electrochemical water-splitting electrode according to the present invention was 23 mV and the overpotential of a commercially-available electrochemical water-splitting electrode was 115 mV, and even when the amount of supported platinum catalyst was 11$\pm$5 $\mu$g/cm$^2$, in other words, even when it was reduced to 1/10 the supported amount of the commercially-available catalyst, the overpotential of the electrochemical water-splitting electrode according to the present invention was 42 mV, namely, lower than the overpotential of the commercially-available electrochemical water-splitting electrode.

Fig. 11 is a graph showing results of evaluation of cycle performance (the amount of supported platinum was 11.5 $\mu$g/cm$^2$) in Experiment Example 1 described below, where the vertical axis represents current density J (mA/cm$^2$) and the horizontal axis represents overpotential (V vs RHE). From Fig. 11, it is indicated that the electrochemical water-splitting electrode according to the present invention exhibited sufficient recycle performance even at the 300th cycle.

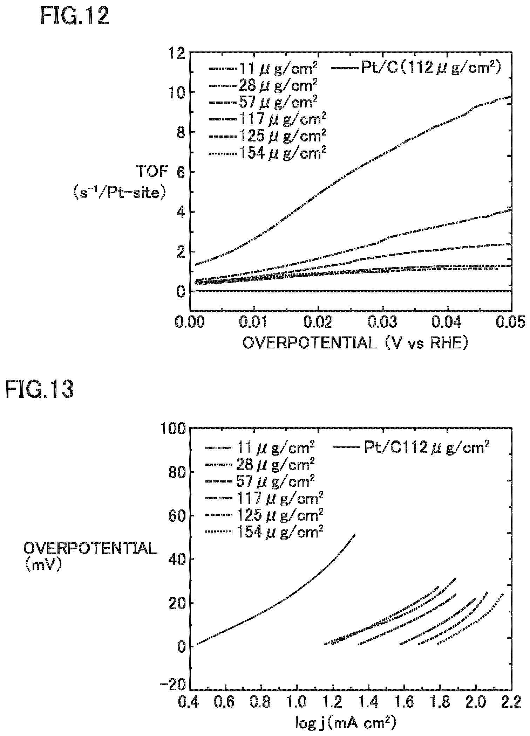

Fig. 12 is a graph showing results of evaluation of turnover frequency (TOF) of the catalyst in Experiment Example 1 described below, where the vertical axis represents TOF (s$^{-1}$/Pt-site) and the horizontal axis represents overpotential (V vs RHE). In Fig. 12, from the turnover frequency (TOF) of the catalyst, which is an index that indicates how many moles of substrate molecule per one mole of catalyst was converted into the product in the catalytic reaction until the catalyst lost its activity, it is indicated that the electrochemical water-splitting electrode according to the present invention has excellent TOF properties even when the amount of supported platinum is reduced to 30 $\mu$g/cm$^2$ or less.

Fig. 13 is a graph showing Tafel Plot in Experiment Example 1 described below, where the vertical axis represents overpotential (mV) and the horizontal axis represents log j (mAcm$^{-2}$). From the Tafel equation, namely, an experiment plot showing the relationship between the electrochemical reaction rate and the overvoltage, a Tafel gradient was determined. From this Tafel gradient, it was found that the catalyst functioned in three steps, namely, the Volmer step, the Heyrovsky step, and the Tafel step.

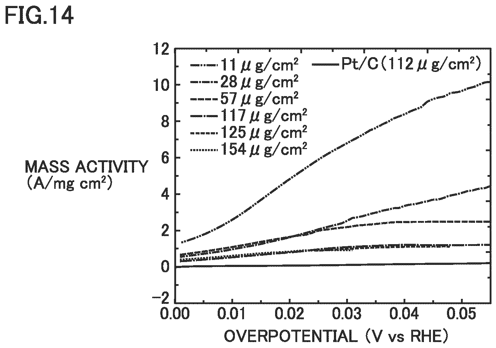

Fig. 14 is a graph showing results of evaluation of hydrogen reduction current density of a platinum catalyst per unit mass (Pt mass activity) at respective overpotentials in Experiment Example 1 described below, where the vertical axis represents mass activity (A/mgcm$^2$) and the horizontal axis represents overpotential (V vs RHE). In Fig. 14, from the results of hydrogen reduction current density of a platinum catalyst per unit mass at respective overpotentials, namely, Pt mass activity, it is suggested that the electrochemical water-splitting electrode according to the present invention when the amount of supported Pt is 30 $\mu$g or less has superior catalytic activity to the commercially available one and has excellent overall performance.

Preferably, in the electrochemical water-splitting electrode according to the present invention, the carbon nanotube molded body is a carbon nanotube sheet, and the carbon nanotube sheet is supported on a surface of a metal structure, or on a surface of carbon fibers, or on a surface of a carbon fiber structure made of carbon fibers. This configuration gives enhanced electrical conductivity, enhanced mechanical strength, and long-term stability, and allows for enhancing overall electrochemical water splitting effects.

As the metal of the metal structure, for enhancing the current density and reducing the loss of free electrons, titanium, platinum, gold, nickel, molybdenum, silver, cobalt, and iron are preferable, and among these, titanium is particularly preferable. When the carbon nanotube sheet is supported on the surface of a metal structure, as compared to when it is supported on the surface of carbon fibers or on the surface of a carbon fiber structure made of carbon fibers, the water electrolysis cell has low internal resistance and high mechanical strength, which is advantageous.

When the carbon nanotube sheet is supported on the surface of carbon fibers or on the surface of a carbon fiber structure made of carbon fibers, as compared to when it is supported on the surface of a metal structure, long-term stability in an acidic environment is obtained and the water electrolysis cell is lightweight. Moreover, carbon fibers and a carbon fiber structure made of carbon fibers are porous with high porosity and, therefore, increase the passage rate of water and gas, which is advantageous.

When used in the electrochemical water-splitting electrode according to the present invention, the carbon nanotube molded body according to the present invention preferably has a sheet form as mentioned above (namely, a carbon nanotube sheet), but this example is not limitative; for example, with the outstanding flexibility and durability, it may be formed into an arch form, a ring band form, a belt form, a thread form, and/or the like.

On the electrochemical water-splitting electrode according to the present invention, platinum is made to be supported as an electrochemical water-splitting catalyst, and, other than platinum, a conventionally-used electrochemical water-splitting catalyst such as iridium oxide may be used.

Although the electrochemical water-splitting electrode according to the present invention is particularly suitable for use in an electrochemical water-splitting apparatus according to the present invention described below, it can also be usable without particular limitations in a variety of conventionally-known applications which use an electrode containing a platinum catalyst, such as, for example, water electrolyzers, hydrogen water generators, portable hydrogen water generators, highly acidic water generators, drinking water fountains, ionic beverage drinker apparatuses, liquid activation/electrolysis apparatuses, electrolytic water generators/evaluators, various batteries (such as secondary batteries, lead rechargeable batteries, dye-sensitized solar cells, fuel cells, and biological fuel cells), and various sensors (such as water quality sensors, hydrogen sensors, gas sensors, biosensors, alcohol sensors, and condensation sensors).

[Electrochemical Water-Splitting Apparatus]

The present invention also provides an electrochemical water-splitting apparatus comprising an electrochemical water-splitting electrode, wherein the electrochemical water-splitting electrode includes: a carbon nanotube molded body having a specific surface area of $700\,m^2$/g or more, a pore distribution from 3 to 15 nm, a tensile strength of 45 MPa or more, and a Young's modulus of 1600 MPa or more; and platinum supported on the carbon nanotube molded body. This electrochemical water-splitting apparatus according to the present invention comprises the above-described electrochemical water-splitting electrode according to the present invention, and therefore is capable of exhibiting outstanding electrochemical water splitting performance as compared to prior art. The electrochemical water-splitting apparatus according to the present invention is simply required to comprise the above-described electrochemical water-splitting electrode according to the present invention; the other configurations are not particularly limited, and those adopted in conventional electrochemical water-splitting apparatuses can be combined as appropriate.

Preferably, in the electrochemical water-splitting apparatus according to the present invention, the amount of supported platinum on the electrochemical water-splitting electrode is within the range of 11 to 154 $\mu g/cm^2$.

Moreover, preferably, in the electrochemical water-splitting apparatus according to the present invention, the carbon nanotube molded body of the electrochemical water-splitting electrode is a carbon nanotube sheet, and the carbon nanotube sheet is supported on a surface of a metal structure, or on a surface of carbon fibers, or on a surface of a carbon fiber structure made of carbon fibers.

[Method of Producing Carbon Nanotube Molded Body]

The present invention also provides a method of producing a carbon nanotube molded body that is capable of properly producing the above-described carbon nanotube molded body that is excellent in specific surface area, pore distribution, tensile strength, and Young's modulus. The method of producing a carbon nanotube molded body according to the present invention comprises: mixing a dispersion containing carbon nanotubes, a dispersant, and a dispersion medium and not containing monosaccharides, with a solution containing cellulose nanofibers and not containing monosaccharides, to obtain a mixture that does not contain monosaccharides; supplying the mixture thus obtained into a mold and performing drying to obtain a hardened product containing the carbon nanotubes; washing the hardened product to remove the dispersant from the hardened product; calcining the hardened product to carbonize the cellulose nanofibers; and performing activation treatment on a surface of the hardened product thus calcined.

In the method of producing a carbon nanotube molded body according to the present invention, firstly, a dispersion containing carbon nanotubes, a dispersant, and a dispersion medium and not containing monosaccharides is mixed with a solution containing cellulose nanofibers and not containing monosaccharides, to obtain a mixture that does not contain monosaccharides.

The carbon nanotubes used in the present invention may be either single-walled ones or multi-walled ones, and due to the excellent electrical conductivity and thermal conductivity, single-walled carbon nanotubes (SWCNTs) are preferably used.

The diameter of the carbon nanotubes is preferably within the range of 0.5 to 2 nm, more preferably within the range of 1 to 1.5 nm, because smaller diameters are preferable due to the physical, electrical, and structural characteristics. The diameter of the carbon nanotubes can be measured with a transmission electron microscope (TEM, Transmission Electron Microscopy); the diameters of ten carbon nanotubes are actually measured and the arithmetic mean is regarded as the diameter of the carbon nanotubes.

The length of the carbon nanotubes is preferably within the range of 0.5 to 3 $\mu$m, more preferably within the range of 1 to 2 $\mu$m, because long, small-diameter carbon nanotubes have high aspect ratios to exhibit enhanced carbon nanotube characteristics and to maintain the network structure, and also because too long length tends not to give a high dispersion effect. The length of the carbon nanotubes can be measured with an atomic force microscope (AFM); the lengths of ten carbon nanotubes are actually measured and the arithmetic mean is regarded as the length of the carbon nanotubes.

As the dispersion medium, water, a water-soluble organic solvent, and a mixture of these may be mentioned. Among these, from the viewpoint of reducing environmental impact, water is preferable. As the water, distilled water, ion-exchanged water, and ultrapure water may be mentioned, for example. As the water-soluble organic solvent, alcohols (such as methanol, ethanol, isopropanol, isobutanol, sec-butanol, tert-butanol, methyl cellosolve, ethyl cellosolve, ethylene glycol, and glycerol), and ethers (such as ethylene glycol dimethyl ether, 1,4-dioxane, and tetrahydrofuran), ketones (such as acetone and methyl ethyl ketone), N,N-dimethylformamide, N,N-dimethylacetamide, and dimethyl sulfoxide may be mentioned, for example.

The dispersant is for dispersing the carbon nanotubes. As the dispersant, ionic surfactants such as cationic surfactants, anionic surfactants, and amphoteric surfactants, nonionic surfactants, disaccharides such as sucrose, maltose, lactose, cellobiose, and trehalose, oligosaccharides such as cyclodextrin, steroid derivatives such as bile acid, cholesterol, and cholic acid, DNA, $\pi$-conjugated polymers, and phthalocyanine derivatives may be mentioned, for example. Among these, for the below-described reason, steroid derivatives are preferable and bile acid is particularly preferable. Carbon nanotubes are hydrophobic, so when a steroid derivative is added thereto as a dispersant, hydrophobic groups of the steroid derivative are bonded to the surface of the carbon nanotubes to pull the carbon nanotubes, and, thereby, the carbon nanotubes tend to be isolated and dispersed.

The content of the dispersant is preferably within the range of 2 to 5 mass%, more preferably within the range of 3 to 4 mass%, relative to the content of the carbon nanotubes, because it is necessary to perform optimization for reducing the usage of the dispersant in order not to affect the electrical conductivity of the carbon nanotubes (increasing the amount of the dispersant enhances dispersion efficiency but it also impairs electrical conductivity).

The diameter of the cellulose nanofibers is preferably within the range of 0.7 to 4 nm, more preferably within the range of 1 to 2 nm, for functionality and for maintaining mechanical characteristics and chemical characteristics. The diameter of the cellulose nanofibers can be measured with an atomic force microscope (AFM); the diameters of ten cellulose nanofibers are actually measured and the arithmetic mean is regarded as the diameter of the cellulose nanofibers.

The length of the cellulose nanofibers is preferably within the range of 1 to 5 $\mu$m, more preferably within the range of 2 to 3 $\mu$m, because it needs to be long enough to maintain dispersion effects in solvent but if it is too short the carbon nanotube-protective characteristics are not maintained. The length of the cellulose nanofibers can be measured with an atomic force microscope (AFM); the lengths of ten cellulose nanofibers are actually measured and the arithmetic mean is regarded as the length of the cellulose nanofibers.

The ratio of the length of the cellulose nanofibers to the diameter (length/diameter; aspect ratio) is preferably within the range of 1000 to 5000, for mechanical and structural characteristics, and also for maintaining the effect of optimally dispersing the carbon nanotubes and the cellulose nanofibers, and also for maintaining their network structure.

As the solvent used in the solution containing cellulose nanofibers and not containing monosaccharides, dimethyl sulfoxide, n-methyl-2-pyrrolidone, and water may be mentioned, for example, and among these, for easily achieving the uniformly dispersing effect and also for low cost and eco-friendliness, water is preferable.

Neither the dispersion containing carbon nanotubes nor the solution containing cellulose nanofibers contains monosaccharides. Here, as the monosaccharides, arabinose, ribose, xylose, glucose, mannose, galactose, fructose, sorbose, rhamnose, fucose, and ribodesose may be mentioned, for example. The dispersion and the solution are mixed together to obtain a mixture that does not contain monosaccharides.

The ratio of the mass of the cellulose nanofibers to the mass of the carbon nanotubes in the mixture is preferably within the range of 0.05 to 1, more preferably within the range of 0.2 to 0.5, because it is necessary to perform optimization for reducing the usage of cellulose nanofibers in order not to affect the electrical conductivity of the carbon nanotubes (increasing the amount of cellulose nanofibers enhances the quality of the carbon nanotube network but it also impairs electrical conductivity), and because the amount of noncrystalline carbon increases after carbonization treatment.

Next, the mixture thus obtained is supplied into a mold and dried, and thereby a hardened product containing carbon nanotubes is obtained. The mold may be selected as appropriate depending on the desired shape of the carbon nanotube molded body, and, for example, for producing a carbon nanotube sheet, a tray can be used as the mold. Drying is performed in an environment at a temperature from 25 to 80°C, for example.

Next, the hardened product is washed to remove the dispersant from the hardened product. More specifically, the hardened product is firstly washed with a polar organic solvent such as alcohol. By this, it is possible to remove the dispersant that was used for dispersion treatment of the carbon nanotubes. Subsequently, the hardened product is washed with an acid. By this, it is possible to remove impurities (such as catalysts) resulting from the processes during the production of the carbon nanotubes. Preferably, the concentration of the acid is adjusted to fall within the range of 45 to 60 mass%. As the acid, hydrochloric acid and nitric acid may be mentioned, for example. Lastly, deionized water is used to wash the hardened product to make it neutral. After the hardened product is washed, the hardened product is preferably dried. The drying here is also performed in an environment at a temperature from 25 to 80°C, for example.

Next, the hardened product is calcined to carbonize the cellulose nanofibers. The calcination is performed in a nitrogen atmosphere at a temperature within the range of 600 to 800°C, for example. In this step, the cellulose nanofibers are carbonized to become amorphous carbon fine particles, and after washed with subcritical water, they become separated from the carbon nanotube hardened product, so, thereby, a highly-pure carbon nanotube molded body can be obtained. The duration of calcination can be set at 60 to 120 minutes, for example.

Lastly, activation treatment is performed on the surface of the hardened product thus calcined. The activation treatment means, for example, heating the carbon nanotube molded body in a carbon dioxide atmosphere to a temperature within the range of 800 to 900°C to activate the carbon nanotube molded body. The duration of the heating in the activation treatment can be set at 30 to 60 minutes, for example.

[Method of Producing Electrochemical Water-Splitting Electrode]

The present invention also provides a method of producing an electrochemical water-splitting electrode, the method comprising performing magnetron sputtering to evaporate platinum onto the carbon nanotube molded body obtained by the above-described method of producing a carbon nanotube molded body according to the present invention. Magnetron sputtering can be properly performed with the use of LL-type High-density General Purpose Sputtering System (manufactured by CFS-4EP-LL i-Miller), for example. When platinum evaporation on the carbon nanotube molded body is performed by magnetron sputtering, as compared to when other methods are adopted (such as atomic layer deposition (ALD), metal organic chemical vapor deposition (MOCVD), and/or physical vapor deposition (PVD), for example), it is possible to precisely control the film thickness of the thin film and keep it uniform, to obtain a platinum-deposited area with a diameter of 15 cm or more at low cost, which is advantageous.

Moreover, when the carbon nanotube molded body of the electrochemical water-splitting electrode according to the present invention is a carbon nanotube sheet and the carbon nanotube sheet is supported on the surface of a metal structure, or on the surface of carbon fibers, or on the surface of a carbon fiber structure made of carbon fibers, as described above, supporting the carbon nanotube sheet is achieved by, in the case of the surface of a metal structure, spraying a Nafion dispersion to the surface of the metal structure and placing the carbon nanotube sheet thereon followed by drying, and in the case of carbon fibers, it is achieved by spraying a Nafion dispersion to the surface of the carbon fibers and placing the carbon nanotube sheet thereon followed by drying. In the case of the surface of a carbon fiber structure, it is achieved by spraying a Nafion dispersion to the surface of the carbon fiber structure and placing the carbon nanotube sheet thereon followed by drying, or by sandwiching the carbon nanotube sheet from both sides with carbon fibers, or by performing hot pressing.

In the following, a more detailed description will be given of the present invention by way of Experiment Example, but it is not intended to limit the scope of the present invention.

<Experiment Example 1>

As carbon nanotubes, ultralong TUBALL (trademark) SWCNTs purchased from OCSiAl Ltd. were used. Reagent grade 0.5 M sulfuric acid and 60% nitric acid were purchased from FUJIFILM Wako Pure Chemical Corporation. As cellulose nanofibers, TEMPO-CNF (2.0 wt%) purchased from Nippon Paper Industries Co., Ltd. were used, which were produced by the Isogai method.

7.5 g of TUBALL SWCNT powder, 15 g of sodium cholate (a dispersant), and 10 g of polyvinylpyrrolidone (a stabilizer) were dispersed, in advance, in 1000 mL of deionized water over 12 hours with the use of a ball mill (a Masuda universal ball mill, Model UBM 2). Then, the resulting mixture was treated in a bead mill (Multi Lab DYNO Mill) containing 0.6-mm zirconium beads, until good dispersion was obtained.

The SWCNT dispersion was mixed with a proper amount of a cellulose nanofiber solution (the solvent was water) at various ratios. Then, the mixture thus obtained was poured into a tetrafluoroethylene tray, and dried at room temperature (25°C). The resulting dry sheet was immersed in 80% ethanol for peeling. Ethanol washing was repeated and breaking-down with concentrated nitric acid was performed, and thereby surfactants were removed from the sheet. Then, the SWCNT sheet was carbonized in a nitrogen atmosphere, and subsequently, activation was performed with the use of a tube furnace at 900°C in carbon dioxide gas.

The SWCNT sheet thus activated was cut into 1 cm×1 cm, and set in a chamber of a magnetron sputtering apparatus (LL-type High-density General Purpose Sputtering System (manufactured by CFS-4EP-LL i-Miller)). After pretreatment was performed, an argon beam was used to form a platinum metal film.

(Evaluation of Properties of Materials)

With the use of a JEOL scanning electron microscope (JSM6390, JSM-7500FA, JSM-7000F), the configuration and the element distribution of the specimen was examined. Transmission electron microscope (TEM) analysis was performed with a high-contrast electron microscope (JEM-1400 manufactured by JEOL Ltd.). X-ray photoelectron spectrometry (XPS) was performed with multi-functional scanning XPS PHI5000 VersaProbe (ULVAC-PHI). With the use of a Beckman Coulter SA (trademark) 3100 analyzer, from a nitrogen adsorption-desorption isotherm, a BET (Brunauer, Emmett, and Teller) specific surface area was determined. With the use of an SII EXSTAR 6000 TG/DTA analyzer, a thermal cracking test was performed. Raman spectra were measured with a Renishaw inVia Raman microscope equipped with a 532-nm laser and calibrated with respect to a silicon wafer. Nuclear reaction analysis (NRA) measurement was performed with the help of Micro Analysis Laboratory, Tandem accelerator (MALT), The University of Tokyo.

In the manner described below, strength evaluation was performed.

·Test Company: DJK
·Test method: JIS K 7127 (JIS K 7161-1)
·Measured items: Tensile strength, tensile (nominal) strain, tensile elastic modulus
·Test piece shape: Test piece type 2, a strip of $10 \times 200$ (mm)

A test piece was cut out, and the grip portion of the brittle specimen was reinforced with tape, followed by being sandwiched between rubber sheets for testing.

Evaluation was performed on the following samples.

·Sample 1: SWCNT sheet after ethanol washing
·Sample 2: SWCNT sheet after nitric acid washing
·Sample 3: SWCNT sheet after carbonization
·Sample 4: SWCNT sheet after activation treatment (corresponding to the "electrochemical water-splitting electrode" according to the present invention)
·Sample 5: SWCNT sheet before washing
·Sample 6: CNTs 75%

Fig. 1 is a graph showing results of specific surface area measurement performed by a BET method for Samples 1 to 4; Fig. 2 is a graph showing results of pore distribution measurement performed for Samples 1 to 4; Fig. 3 is a graph showing results of strength evaluation performed for Samples 3, 4; Fig. 4 gives graphs showing results of component analysis performed by an XPS method for Sample 4; and Fig. 5 is a graph showing results of measurement of the sp2/sp3 ratio performed by Raman spectrometry for Samples 1 to 6. Measured values for Samples 1 to 4 are shown in Table 1.

[Table 1]

| | Sample 1 | Sample 2 | Sample 3 | Sample 4 |
|---|---|---|---|---|
| Specific surface area ($m^2$/g) | $59.2961 \pm 0.1154$ | $305.7757 \pm 1.4906$ | $545.1061 \pm 1.9862$ | $1031.2006 \pm 2.3456$ |
| Pore diameter (nm) | 3.6 | 8.9 | 9.8 | 13.5 |
| Micropore volume ($cm^3$/g) | 0.005068 | 0.032440 | 0.058105 | 0.187242 |
| Micropore specific surface area ($m^2$/g) | 12.8331 | 68.9900 | 123.3655 | 450.0374 |

Moreover, Fig. 7 is a photograph (10000000 times) of platinum supported on one carbon nanotube of Sample 4, taken with an atomic resolution elemental mapping structural analysis microscope (JEM-ARM200F Thermal FE STEM, manufactured by JEOL). Moreover, Sample 4 was examined with an atomic resolution elemental mapping structural analysis microscope (JEM-ARM200F Thermal FE STEM, manufactured by JEOL); results of carbon (C) (10000000 times) are shown in Fig. 8(a), those of oxygen (O) (10000000 times) in Fig. 8(b), and those of platinum (Pt) (10000000 times) in Fig. 8(c).

Moreover, with the use of PHI500 VersaProbe (manufactured by ULVAC-PHI), as for Sample 4, C1s spectra before electrochemical water splitting are shown in Fig. 9(a), C1s spectra after electrochemical water splitting in Fig. 9(b), Pt4f spectra before electrochemical water splitting in Fig. 9(c), and Pt4f spectra after electrochemical water splitting in Fig.

9(d). In Fig. 9(c), noticeable peaks are observed at 71.4 eV and 74.8 eV for Pt4f7/2 and 4f5/2, respectively. As a result of deconvolution of these peaks, peaks for three types of chemical isotopes, namely, Pt0, PtII, and PtIV, were observed at 71.2 eV, 72.4 eV, and 73.7 eV, respectively. Moreover, from Figs. 9(a) and 9(b), it was indicated that, as for the C1s spectra, after addition of platinum, the peak for sp2 hybridization became weaker and that for sp3 hybridization became stronger. By a detailed analysis, it was proved that metal platinum is dominant and there is a strong interaction between the metal and the substrate.

(Electrochemical Properties)

A glassy carbon electrode (GCE, with a diameter of 3 mm) obtained from CHI Instruments was used, and, on this, an SWCNT sheet after activation treatment with an amount of supported platinum of 11 $\mu$g/cm$^2$, 28 $\mu$g/cm$^2$, 57 $\mu$g/cm$^2$, 117 $\mu$g/cm$^2$, 125 $\mu$g/cm$^2$, or 154 $\mu$g/cm$^2$ was made to be supported, followed by electrochemical analysis. The GCE was polished on a diamond polish pad with the use of polishing diamond suspended in distilled water, and on an alumina polish pad with the use of alumina powder suspended in distilled water. After the first polishing stage and the second polishing stage, the electrode was sufficiently washed with deionized water. Before the catalyst was made to be supported on it, the GCE electrode was immersed in an isopropanol solution and subjected to sonication for about 10 seconds, followed by another washing. To the GCE thus washed, 2 $\mu$l of 0.5 wt% Nafion in ethanol was added dropwise. The SWCNT sheet with platinum deposited thereon was carefully cut into a circle with a diameter of 3 mm, and placed on the GCE before Nafion was dried. The electrode was further dried overnight under ambient conditions, for use. Usually, 50 mg of commercially available Pt/C (Pt-support rate, 5%) powder was dispersed in 1 mL of a Nafion solution (0.5 wt% in ethanol), and sonicated in an ultrasonic bath for 30 minutes to prepare a uniform ink. The Pt-containing ink in an amount of 4 $\mu$l was made to deposit on the GCE to prepare a Pt/C electrode. An electrode catalytic activity test was performed with the use of an electrochemical analyzer, Model CHI 760E, CH Instruments, in a standard three-electrode system. 0.5 M $H_2SO_4$, a platinum coil, and an Ag/AgCl electrode were used as an electrolyte solution (deionized water containing 0.5 M sulfuric acid), a counter electrode, and a reference electrode. The scanning (sweeping) rate was set at 10 mV/second. Fig. 10 is a graph showing results of the evaluation of electrode catalytic activity (a three-electrode cell) based on current density/overpotential as an index, where the vertical axis represents current density J (mA/cm$^2$) and the horizontal axis represents overpotential (V vs RHE). From the results shown in Fig. 10, it was found that at a current density of 100 mA/cm$^2$ and at the same amount of supported platinum (117$\pm$5 $\mu$g/cm$^2$), the overpotential of the electrochemical water-splitting electrode according to the present invention was 23 mV and the overpotential of a commercially-available electrochemical water-splitting electrode was 115 mV, and even when the amount of supported platinum catalyst was 11$\pm$5 $\mu$g/cm$^2$, in other words, even when it was reduced to 1/10 the supported amount of the commercially-available catalyst, the overpotential of the electrochemical water-splitting electrode according to the present invention was 42 mV, namely, lower than the overpotential of the commercially-available electrochemical water-splitting electrode.

Moreover, an electrode catalytic activity test was performed with the use of an electrochemical analyzer, Model CHI 760E, CH Instruments, in a standard three-electrode system. 0.5 M $H_2SO_4$, a platinum coil, and an Ag/AgCl electrode were used as an electrolyte solution (deionized water containing 0.5 M sulfuric acid), a counter electrode, and a reference electrode. The scanning (sweeping) rate was set at 10 mV/second. The scanning range was set at within the range of electric potential of 0 V to -0.26 V, and the number of cycles was set at 3000. By the evaluation of electrode catalytic activity (a three-electrode cell) based on current density/overpotential as an index, cycle performance (the amount of supported platinum was 11.5 $\mu$g/cm$^2$) was evaluated, and the results are shown in the graph of Fig. 11, where the vertical axis represents current density J (mA/cm$^2$) and the horizontal axis represents overpotential (V vs RHE). From Fig. 11, it is indicated that the electrochemical water-splitting electrode according to the present invention exhibited sufficient recycle performance even at the 3000th cycle.

Moreover, the amount of platinum metal was quantitatively measured by Inductively Coupled Plasma Atomic Emission Spectrometry (ICP-AES). Turnover frequency (TOF) of the catalyst in electrochemical water splitting was calculated by the equation below.

[Math 1]

$$TOF = \frac{\text{Total number of hydrogen turnover/geometric area(cm}^2)}{\text{Number of activesites/geometric area(cm}^2)}$$

Fig. 12 is a graph showing results of evaluation of turnover frequency (TOF) of the catalyst for SWCNT sheets after activation treatment with an amount of supported platinum of 11 $\mu$g/cm$^2$, 28 $\mu$g/cm$^2$, 57 $\mu$g/cm$^2$, 117 $\mu$g/cm$^2$, 125 $\mu$g/cm$^2$, or 154 $\mu$g/cm$^2$, where the vertical axis represents TOF (s-1/Pt-site) and the horizontal axis represents overpotential (V vs RHE). In Fig. 12, from the turnover frequency (TOF) of the catalyst, which is an index that indicates how many moles of substrate molecule per one mole of catalyst was converted into the product in the catalytic reaction until the catalyst lost its activity, it is indicated that the electrochemical water-splitting electrode according to the present invention has excellent TOF properties even when the amount of supported platinum is reduced to 30 $\mu$g/cm$^2$ or less.

Moreover, an electrode catalytic activity test was performed with the use of an electrochemical analyzer, Model CHI 760E, CH Instruments, in a standard three-electrode system. 0.5 M H$_2$SO$_4$, a platinum coil, and an Ag/AgCl electrode were used as an electrolyte solution (deionized water containing 0.5 M sulfuric acid), a counter electrode, and a reference electrode. The scanning (sweeping) rate was set at 10 mV/second. Fig. 13 is a graph showing results of the evaluation of electrode catalytic activity (a three-electrode cell) based on current density/overpotential as an index, where the vertical axis represents overpotential (V vs RHE) and the horizontal axis represents the common logarithm of current density J (mA/cm$^2$). From the Tafel equation, namely, an experiment plot showing the relationship between the electrochemical reaction rate and the overvoltage, a Tafel gradient was determined. From this Tafel gradient, it was found that the catalyst functioned in the three steps shown by the formulae below.

[Math 2]

$$\text{Volmer step}: \quad H^+_{(ad)} + e^- \rightleftarrows H*_{(ad)}$$

$$\text{Heyrovsky step}: \quad 2H*_{(ad)} \rightleftarrows H_2$$

$$\text{Tafel step}: \quad H*_{(ad)} + H^+ \rightleftarrows H^2$$

Moreover, an electrode catalytic activity test was performed with the use of an electrochemical analyzer, Model CHI 760E, CH Instruments, in a standard three-electrode system. 0.5 M H$_2$SO$_4$, a platinum coil, and an Ag/AgCl electrode were used as an electrolyte solution (deionized water containing 0.5 M sulfuric acid), a counter electrode, and a reference electrode. The scanning (sweeping) rate was set at 10 mV/second. Fig. 14 is a graph showing results of the evaluation of hydrogen reduction current density of a platinum catalyst per unit mass (Pt mass activity) at respective overpotentials, where the vertical axis represents mass activity (A/mgcm$^2$) and the horizontal axis represents overpotential (V vs RHE). In Fig. 14, from the results of hydrogen reduction current density of a platinum catalyst per unit mass at respective overpotentials, namely, Pt mass activity, it is suggested that the electrochemical water-splitting electrode according to the present invention when the amount of supported Pt is 30 $\mu$g/cm$^2$ or less has superior catalytic activity to the commercially available one and has excellent overall performance.

(Discussion)

In order to use carbon nanotubes for various purposes of use, a tube-form dispersion is an important step. A dispersant and a stabilizer are essential elements for producing a high-quality SWCNT dispersion. Moreover, for the carbon nanotube sheet to be self-standing, it is necessary to effectively remove polymer components. The polymer used in Experiment Example 1 (such as sodium cholate and polyvinylpyrrolidone, for example) is highly soluble in ethanol. Therefore, the carbon nanotube sheet was firstly washed with ethanol several times, and then broken down with concentrated nitric acid. However, cellulose nanofibers are insoluble in ethanol or nitric acid. Hence, it was found that the carbon nanotube network was supported by the cellulose nanofiber support. The remaining cellulose nanofibers were removed by water washing and carbonization.

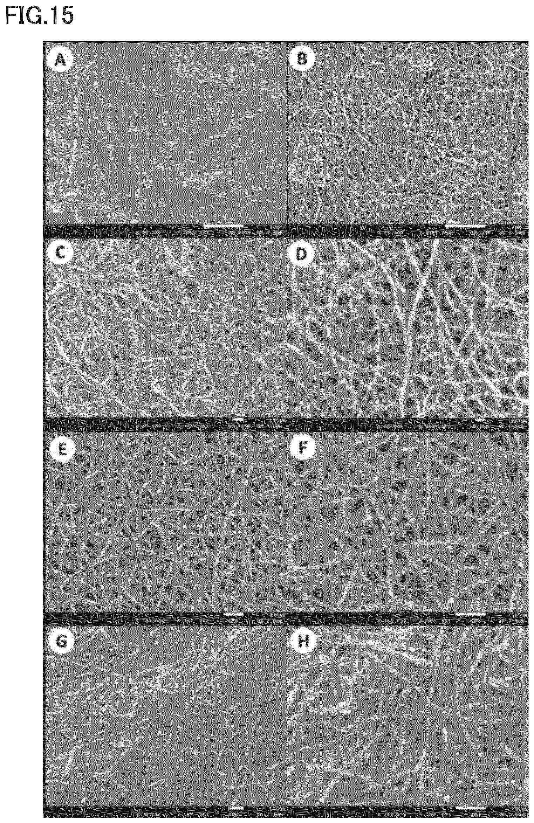

Detailed structural examination of the SWCNT sheet in respective stages was performed with a scanning electron microscope (SEM), and Fig. 15 gives the resulting high-magnification images. The photographs in Fig. 15 were taken in the following stages, respectively (the thickness was 40 $\mu$m in A to D).

A: Before washing (magnification, 20000 times)
B: After washing (magnification, 20000 times)
C: Cellulose nanofibers were not used (magnification, 50000 times)
D: Cellulose nanofibers were used and platinum was made to be supported on them (magnification, 50000 times)
E: Thickness was 10 nm and magnification was low (100000 times)
F: Thickness was 10 nm and magnification was high (150000 times)
G: Thickness was 20 nm and magnification was low (75000 times)
H: Thickness was 20 nm and magnification was high (150000 times)

From A of Fig. 15, it is indicated that the unwashed SWCNT sheet does not have a porous structure and all pores are filled with surfactant and polymer. However, after the dispersant and the polymer were removed, a porous structure appeared as seen in B of Fig. 15. As the individual carbon nanotubes become longer, the individual carbon nanotubes tend to become bent. In Experiment Example 1, ultralong single-walled carbon nanotubes (TUBALL (trademark) SWCNTs) with an average length of 1 to 2 $\mu$m were used, so to keep the carbon nanotubes straight, a strong filler is necessary. Cellulose nanofibers is a strong filler for sheet casting and useful for keeping the ultralong SWCNTs straight. The importance of cellulose nanofibers can be easily explained by comparing C and D of Fig. 15. In C of Fig. 15, no cellulose nanofibers were present and therefore the individual carbon nanotubes were bent, but as seen in D of Fig. 15, when cellulose nanofibers were present, the individual carbon nanotubes were straight. From D of Fig. 15, it was found that a continuous interconnect porous structure having nano-sized pores was obtained. The carbon nanotubes were tightly connected to one another, and as visually observed, a continuous interconnect network was developed inside the SWCNT sheet (D of Fig. 15).

Each of E to H of Fig. 15 is a high-resolution SEM image of an SWCNT sheet on which platinum is supported, clearly showing that the individual fibers of the SWCNT sheet are surprisingly evenly and smoothly covered with platinum. Platinum was not randomly deposited on the SWCNT sheet, but it selectively covered the individual carbon nanotube strands. In a high-magnification image of a specimen with 10-nm-thick platinum coating (F of Fig. 15), pores were very clear and no clusters were observed. From a high-magnification image of an SWCNT sheet on which 20-nm-thick platinum was supported (H of Fig. 15), it is indicated that as the thickness of the platinum layer increases, the porosity can decrease and the electrolyte can be blocked.

Moreover, from the results shown in Fig. 1, it was found that the nitrogen adsorption-desorption isotherm for Samples 1 to 4 is aligned with Type IV isotherm. On Type IV isotherm, a hysteresis loop associated with capillary condensation at mesopores is observed, and as $P/P^0$ increases, adsorption is restricted. The early-stage part of the isotherm is attributable to monolayer-multilayer adsorption to mesopore walls, which is the same pathway as a corresponding part of Type II isotherm, and subsequently pore condensation occurs. To be more specific, from fitting of the isotherm in Fig. 1 with Type IV(a) isotherm, it was found that capillary condensation leads to hysteresis in larger mesopores (> 4 nm).

The BET specific surface area of the carbon nanotube sheet after ethanol washing is 59 $m^2$/g, which is very low as compared to the value of the initial 75% SWCNT powder. After nitric acid treatment, due to breaking-down of the polymer, the specific surface area gradually increased (305 $m^2$/g). After carbonization, the surface area of the carbon nanotube sheet was 545 $m^2$/g and the average pore size was about 9.8 nm. In this stage, all of the polymer that was not removed and the cellulose nanofibers form small amorphous clusters, and give a more mesoporous structure to the carbon nanotube sheet. Carbon reacts with carbon dioxide during activation to form carbon monoxide (gasification) to produce microspores. Because of this, by optimum activation of the carbonized carbon nanotube sheet, a significant BET specific surface area of 1031 $m^2$/g can be obtained. Carbon dioxide also contributed to removing amorphous carbon clusters that were trapped in the carbon nanotube network, and thereby to opening all the available pores, and, as a result, the average pore size increased to reach 13.5 nm.

In the Raman spectra (Fig. 5), a G band peak near 1590 $cm^{-1}$ attributable to in-plane vibration of a six-membered ring, which is familiar in a carbon-based substance, was observed. In carbon nanotubes, a G band is divided and split into G+ and G-. G+ (1593 $cm^{-1}$) corresponds to the longitudinal mode aligned with the axial direction of carbon nanotubes, and G- (1572 $cm^{-1}$) corresponds to the transverse mode perpendicular to the axis. The band observed near 1339 $cm^{-1}$ is called a D band, and related to defects and faults of carbon nanotubes such as amorphous carbon, holes, and heteroatoms. In the region from 350 to 100 $cm^{-1}$, SWCNTs give a series of bands (not shown) corresponding to the radial breathing mode (RBM) that expands and shrinks in the radial direction. The ratio of intensity of G band to D band (the G/D ratio) is used for evaluation of carbon nanotube defects. The calculated value of the G/D ratio of powder-form SWCNTs was 51, and that of the carbon nanotube sheet after activation treatment was 49. This result proves that optimum activation does not cause an increase of carbon nanotube defects. Because amorphous carbon is less stable than carbon nanotubes, the reactivity with carbon dioxide at the time of activation was higher than carbon nanotubes. However, it was found that as the gas flow rate increased, the reactivity of carbon nanotubes with carbon dioxide increased, and, as a result, defects gradually increased.

The SWCNT sheet prepared in Experiment Example 1 is flexible and foldable, and, therefore, expected to have mechanical strength. Typical stress-strain curves of SWCNT sheet samples at various temperatures are shown in Fig. 3. Young's modulus and tensile strength can be extracted from the stress-strain curves. From this data, it was found that the SWCNT sheets after carbonization and activation (Samples 3, 4) exhibit high tensile properties. Tensile strength is greatly dependent on thickness, and a recommended thickness of the SWCNT sheet is from 50 to 60 $\mu$m. Further, the SWCNT sheet can withstand at 300°C and -60°C.

The elementary composition and the chemical state of the specimen were evaluated by XPS analysis (Fig. 4). The C1s deconvolution peaks are at 284.4 eV and 285.6 eV and correspond to hybridization of sp2 (C-C bond) and sp3 (C-O bond), respectively. The O1s deconvolution peaks are at 530.9, 531.5, and 532.3 eV, and correspond to O, O-H, and C-OH that underwent physical adsorption. The purity of the CNTs can be determined from the proportion of sp2-hybridized carbon atoms, and the proportion of carbon increases by washing treatment. In relation to the Raman spectra, the XPS results verify the dominance of sp2 bond in the SWCNT sheet.

The high-resolution Pt4f spectra of SWCNT sheets on which platinum is supported (Fig. 9) have noticeable peaks at 71.4 eV and 74.8 eV for Pt 4f7/2 and 4f5/2, respectively. As a result of deconvolution of these peaks, peaks for three types of chemical isotopes, namely, Pt(0), Pt(II), and Pt(IV), were observed at 71.2 eV, 72.4 eV, and 73.7 eV, respectively (Fig. 9(c), Fig. 9(d)). It was indicated that, as for the C1s spectra of the SWCNTs, after platinum coating, the peak for sp2 hybridization became weaker and that for sp3 hybridization became stronger. By a detailed analysis, it was proved that metal platinum is dominant and there is a strong interaction between the metal and the substrate (Fig. 9(a), Fig. 9(b)).

It should be construed that the embodiments disclosed herein are given by way of illustration in all respects, not by way of limitation. It should also be construed that the scope of the present invention is interpreted by the terms of the appended claims, not by the above description, and encompasses all modifications and variations equivalent in meaning and scope to the claims.

**Claims**

1. A carbon nanotube molded body including carbon nanotubes, wherein

   the carbon nanotube molded body has a specific surface area of 700 $m^2$/g or more,
   the carbon nanotube molded body has a pore distribution from 3 to 15 nm,
   the carbon nanotube molded body has a tensile strength of 45 MPa or more, and
   the carbon nanotube molded body has a Young's modulus of 1600 MPa or more.

2. The carbon nanotube molded body according to claim 1, wherein the carbon nanotube molded body has a carbon content of 98 mass% or more.

3. The carbon nanotube molded body according to claim 1, wherein the carbon nanotube molded body is a carbon nanotube sheet.

4. An electrochemical water-splitting electrode, comprising:

   a carbon nanotube molded body having a specific surface area of 700 $m^2$/g or more, a pore distribution from 3 to 15 nm, a tensile strength of 45 MPa or more, and a Young's modulus of 1600 MPa or more; and
   platinum supported on the carbon nanotube molded body.

5. The electrochemical water-splitting electrode according to claim 4, wherein an amount of supported platinum is within the range of 11 to 154 $\mu$g/cm$^2$.

6. The electrochemical water-splitting electrode according to claim 4, wherein

   the carbon nanotube molded body is a carbon nanotube sheet, and
   the carbon nanotube sheet is supported on a surface of a metal structure, or on a surface of carbon fibers, or on a surface of a carbon fiber structure made of carbon fibers.

7. An electrochemical water-splitting apparatus comprising an electrochemical water-splitting electrode, wherein the electrochemical water-splitting electrode includes:

   a carbon nanotube molded body having a specific surface area of 700 $m^2$/g or more, a pore distribution from 3 to 15 nm, a tensile strength of 45 MPa or more, and a Young's modulus of 1600 MPa or more; and
   platinum supported on the carbon nanotube molded body.

8. The electrochemical water-splitting apparatus according to claim 7, wherein an amount of supported platinum on the electrochemical water-splitting electrode is within the range of 11 to 154 $\mu$g/cm$^2$.

9. The electrochemical water-splitting apparatus according to claim 7, wherein

   the carbon nanotube molded body of the electrochemical water-splitting electrode is a carbon nanotube sheet, and

the carbon nanotube sheet is supported on a surface of a metal structure, or on a surface of carbon fibers, or on a surface of a carbon fiber structure made of carbon fibers.

10. A method of producing a carbon nanotube molded body including carbon nanotubes, the method comprising:

mixing a dispersion containing carbon nanotubes, a dispersant, and a dispersion medium and not containing monosaccharides, with a solution containing cellulose nanofibers and not containing monosaccharides, to obtain a mixture that does not contain monosaccharides;
supplying the mixture thus obtained into a mold and performing drying to obtain a hardened product containing the carbon nanotubes;
washing the hardened product to remove the dispersant from the hardened product;
calcining the hardened product to carbonize the cellulose nanofibers; and
performing activation treatment on a surface of the hardened product thus calcined.

11. A method of producing an electrochemical water-splitting electrode, the method comprising performing magnetron sputtering to evaporate platinum onto the carbon nanotube molded body obtained by the method according to claim 10.

FIG.1

FIG.2

FIG.3

## FIG.4

(a)

(b)

FIG.5

FIG.6

FIG.7

FIG.8

(a)

(b)

(c)

FIG.9

FIG.10

FIG.11

FIG.12

FIG.13

FIG.14

FIG.15

| | INTERNATIONAL SEARCH REPORT | International application No. |
|---|---|---|
| | | **PCT/JP2024/017128** |

**A. CLASSIFICATION OF SUBJECT MATTER**

***C01B 32/168***(2017.01)i; ***C01B 3/02***(2006.01)i
FI:    C01B32/168; C01B3/02 H

According to International Patent Classification (IPC) or to both national classification and IPC

**B. FIELDS SEARCHED**

Minimum documentation searched (classification system followed by classification symbols)

C01B32/00-32/991; C01B3/00- 6/34; C25B1/00-9/77; 13/00-15/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2020/0330947 A1 (KOREA INSTITUTE OF MACHINERY & MATERIALS) 22 October 2020 (2020-10-22)<br>    paragraphs [0003], [0035], examples 1-3, fig. 7-9, 15-17, 19 | 1-3 |
| Y | | 4-9 |
| Y | JP 2002-56852 A (SONY CORPORATION) 22 February 2002 (2002-02-22)<br>    paragraphs [0068]-[0075], fig. 2 | 4-9 |
| Y | JP 2019-75277 A (TOYOTA JIDOSHA KABUSHIKI KAISHA) 16 May 2019 (2019-05-16)<br>    paragraphs [0013]-[0060], fig. 1 | 4-9 |
| X | JP 2022-121865 A (UNIVERSITY OF TOKYO) 22 August 2022 (2022-08-22)<br>    paragraphs [0041], [0045], comparative example 3, table 1 | 10 |
| A | | 11 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 July 2024** | **30 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2024/017128** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2022-157729 A (MITSUBISHI HEAVY INDUSTRIES, LTD.) 14 October 2022 (2022-10-14)<br>        entire text | 1-11 |
| A | JP 2020-164378 A (UNIVERSITY OF TOKYO) 08 October 2020 (2020-10-08)<br>        entire text | 1-11 |
| A | JP 2018-145027 A (NATIONAL INSTITUTE OF ADVANCED INDUSTRIAL SCIENCE AND TECHNOLOGY) 20 September 2018 (2018-09-20)<br>        entire text | 1-11 |
| A | WO 2016/133207 A1 (NATIONAL INSTITUTE OF ADVANCED INDUSTRIAL SCIENCE AND TECHNOLOGY) 25 August 2016 (2016-08-25)<br>        entire text | 1-11 |

Form PCT/ISA/210 (second sheet) (July 2022)

**INTERNATIONAL SEARCH REPORT**
Information on patent family members

International application No.

**PCT/JP2024/017128**

| Patent document cited in search report | | | Publication date (day/month/year) | Patent family member(s) | | | Publication date (day/month/year) |
|---|---|---|---|---|---|---|---|
| US | 2020/0330947 | A1 | 22 October 2020 | WO | 2017/217832 | A1 | |
| | | | | KR | 10-2017-0142937 | A | |
| | | | | KR | 10-2017-0142935 | A | |
| | | | | KR | 10-2017-0142936 | A | |
| | | | | KR | 10-2017-0142934 | A | |
| JP | 2002-56852 | A | 22 February 2002 | (Family: none) | | | |
| JP | 2019-75277 | A | 16 May 2019 | (Family: none) | | | |
| JP | 2022-121865 | A | 22 August 2022 | (Family: none) | | | |
| JP | 2022-157729 | A | 14 October 2022 | WO entire text | 2022/209743 | A1 | |
| JP | 2020-164378 | A | 08 October 2020 | (Family: none) | | | |
| JP | 2018-145027 | A | 20 September 2018 | (Family: none) | | | |
| WO | 2016/133207 | A1 | 25 August 2016 | US entire text | 2017/0369660 | A1 | |
| | | | | CN | 107207869 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022121865 A